# EUROPÄISCHE PATENTANMELDUNG

(11) **EP 3 432 510 A1**
(43) Veröffentlichungstag der Anmeldung: **23.01.2019**
(21) Anmeldenummer: 17181833.9
(22) Anmeldetag: 18.07.2017
(51) Int. Cl.: H04L 9/32

(54) **VERWALTEN EINES DIGITALEN ZERTIFIKATS**

(71) Anmelder: Siemens Aktiengesellschaft, 80333 München (DE)
(72) Erfinder: Aschauer, Hans, 81829 München (DE); Fries, Steffen, 85598 Baldham (DE)

(57) **Zusammenfassung**

Es wird ein digitales Zertifikat (1) für eine Nutzereinrichtung (2) vorgeschlagen, wobei das Zertifikat (1) eine Zertifikatserweiterung (14) zur Bereitstellung von mit unterschiedlichen kryptographischen Schlüsseln (11a - 11c) verschlüsselten nutzerbezogenen Datensätzen (15a - 15c) umfasst, und wobei jeder der nutzerbezogene Datensätze (15a - 15c) nur von einer Diensteinrichtung (3a - 3c) zum Bereitstellen von Diensten in Abhängigkeit von den nutzerbezogenen Daten abrufbar ist, die einen korrespondierenden kryptographischen Schlüssel (12a - 12c) zum Entschlüsseln des nutzerbezogener Datensatzes (15a - 15c) umfasst.

Es wird ferner ein Verfahren zum Verwalten des digitalen Zertifikats (1) vorgeschlagen. Ein einziges digitales Zertifikat kann verwendet werden, um nutzerbezogene Datensätze für mehrere Diensteinrichtungen derart zu übermitteln, das jede Diensteinrichtungen nur auf diejenigen nutzerbezogenen Daten zugreifen kann, die für sie bestimmt sind.

## Beschreibung

Die vorliegende Erfindung betrifft ein digitales Zertifikat sowie ein Verfahren zum Verwalten eines digitalen Zertifikats.

Zum Bereitstellen von Diensten an eine Nutzereinrichtung benötigen Diensteinrichtungen, wie zum Beispiel Onlinebestelldienste, häufig Daten von der Nutzereinrichtung. Die Daten von der Nutzereinrichtung, auch nutzerbezogene Daten, können Informationen über einen Nutzer, beispielsweise sein Geburtsdatum, seine Anschrift oder seinen Namen, enthalten.

Die nutzerbezogenen Datenkönnen den Diensteinrichtungen über ein einziges digitales Zertifikat bereitgestellt werden. Es besteht ein Bedarf, dass nicht alle nutzerbezogenen Daten von allen Diensteinrichtungen abgerufen werden können. Insbesondere sollen die mit dem Zertifikat bereitgestellte nutzerbezogenen Daten geschützt werden.

Vor diesem Hintergrund besteht eine Aufgabe der vorliegenden Erfindung darin, ein erweitertes digitales Zertifikat zum Schutz von nutzerbezogenen Datenbereitzustellen. Eine weitere Aufgabe besteht darin, ein erweitertes Verfahren zum Verwalten eines digitalen Zertifikats zu schaffen.

Demgemäß wird ein digitales Zertifikat für eine Nutzereinrichtung vorgeschlagen. Das digitale Zertifikat umfasst eine Zertifikatserweiterung zur Bereitstellung von mit unterschiedlichen kryptographischen Schlüsseln verschlüsselten nutzerbezogenen Datensätzen. Jeder der nutzerbezogenen Datensätze ist nur von einer Diensteinrichtung zum Bereitstellen von Diensten in Abhängigkeit von den nutzerbezogenen Daten abrufbar, die einen korrespondierenden kryptographischen Schlüssel zum Entschlüsseln des nutzerbezogenen Datensatzes umfasst.

Eine Nutzereinrichtung kann eine Einrichtung sein, die die Dienste einer Diensteinrichtung nutzen möchte. Die Nutzereinrichtung kann von einem Nutzer bedient werden. Beispielsweise ist die Nutzereinrichtung eine Chipkarte oder ein privater Rechner eines Nutzers.

Unter einer Diensteinrichtung ist insbesondere eine Einrichtung zu verstehen, die Dienste anbietet, wie zum Beispiel ein Onlinebestelldienst oder ein Geldautomat. Die Diensteinrichtung stellt insbesondere der Nutzereinrichtung Dienste zur Verfügung. Hierzu kann die Diensteinrichtung nutzerbezogene Datenbenötigen. Insbesondere kann die Diensteinrichtung ohne die notwendigen nutzerbezogene Daten der Nutzereinrichtung keine Dienste erbringen.

Die nutzerbezogenen Daten können Informationen über den Nutzer der Nutzereinrichtung umfassen, wie zum Beispiel ein Geburtsdatum, eine Anschrift oder einen Namen des Nutzers. Ferner können die nutzerbezogenen Datennutzereinrichtungsspezifische Daten sein, wie eine Seriennummer, ein Hersteller oder eine IP Adresse der Nutzereinrichtung. In Ausführungsformen sollten die nutzerbezogenen Daten aus Sicherheitsgründen nicht durch die Diensteinrichtung selbst gespeichert werden.

Die nutzerbezogenen Daten können der Diensteinrichtung über das digitale Zertifikat, im Folgenden auch Zertifikat, bereitgestellt werden. Es können unterschiedliche nutzerbezogene Daten von mehreren, unterschiedlichen Diensteinrichtungen benötigt werden. Alle nutzerbezogene Datenkönnen von einem einzigen Zertifikat übermittelt werden.

Die nutzerbezogenen Daten können hierbei in mehrere nutzerbezogene Datensätze aufgeteilt werden. Die jeweiligen nutzerbezogenen Datensätze können hierbei diejenigen nutzerbezogenen Daten enthalten, die die jeweiligen Diensteinrichtungen zum Erbringen ihrer Dienste benötigen. Einige der nutzerbezogenen Daten können in mehreren nutzerbezogenen Datensätzen vorliegen. Die nutzerbezogenen Datensätze umfassen beliebig viele Nutzerdaten. Die nutzerbezogenen Datensätze können zudem eine vorbestimmte, für die Diensteinrichtung einfach zu verwaltende Struktur aufweisen, sodass der Diensteinrichtung die nutzerbezogenen Daten im Kontext zur Verfügung gestellt werden können.

Die jeweiligen nutzerbezogenen Datensätze sind verschlüsselt, insbesondere anhand unterschiedlicher kryptographischer Schlüssel. Zum Verschlüsseln der nutzerbezogenen Datensätze können die nutzerbezogenen Daten selbst direkt verschlüsselt werden. Als Schlüssel kann ein Schlüssel verwendet werden, der die nutzerbezogenen Daten unverändert widergibt. Die verschlüsselten nutzerbezogenen Datensätze können in der Zertifikatserweiterung als Teil des digitalen Zertifikats übermittelt werden.

Jeder verschlüsselte nutzerbezogene Datensatz kann insbesondere nur durch eine Diensteinrichtung entschlüsselt werden, die einen Schlüssel aufweist, mit dem der verschlüsselte nutzerbezogene Datensatz entschlüsselt werden kann. Zum Beispiel kann ein nutzerbezogener Datensatz, der mit einem bestimmten Schlüssel verschlüsselt wurde, nur anhand eines bestimmten korrespondierenden Schlüssels entschlüsselt werden. Der bestimmte Schlüssel und der korrespondierende Schlüssel bilden insbesondere ein auf einzigartiger Weise miteinander verbundenes Schlüsselpaar.

Jede Diensteinrichtung kann beispielsweise nur auf den nutzerbezogenen Datensatz zugreifen, der zum Erbringen der Dienste durch diese Diensteinrichtung notwendig ist. Die Information aus den anderen nutzerbezogenen Datensätzen kann der Diensteinrichtung dabei unbekannt bleiben.

Das digitale Zertifikat ist insbesondere nutzereinrichtungsspezifisch. Es kann zum Authentisieren und/oder Autorisieren der Nutzereinrichtung durch die Diensteinrichtung verwendet werden. Das digitale Zertifikat kann einen Standardteil sowie die Zertifikatserweiterung umfasst.

Mit der Zertifikatserweiterung kann das digitale Zertifikat insbesondere derart erweitert werden, dass es zusätzliche Funktionen durchführen kann. Bekannte Zertifikatserweiterungen sind zum Beispiel in RFC 5280 beschrieben und geben häufig an, wie das digitale Zertifikat zu verwenden ist.

Die Zertifikatserweiterung kann dem digitalen Zertifikat somit ermöglichen, zugriffsgeschützte nutzerbezogene Daten in verschlüsselten nutzerbezogenen Datensätzen zu transportieren. Die jeweiligen Diensteinrichtungen können somit zum Beispiel nicht auf nutzerbezogene Daten zugreifen, die nicht für sie bestimmt sind.

Nutzerbezogene Daten, die gegenüber einigen Diensteinrichtungen geheim gehalten werden sollten, können mit der Zertifikatserweiterung geschützt werden. Die Zertifikatserweiterung erhöht somit die Sicherheit des digitalen Zertifikats.

Ein einziges Zertifikat kann außerdem von mehreren Diensteinrichtungen benutzt werden, wobei die Diensteinrichtungen Zugriff auf unterschiedliche nutzerbezogene Datensätze gewinnen können. Dadurch, dass ein Zertifikat für mehrere Diensteinrichtungen einsetzbar ist, kann ein zum Speichern von Zertifikaten benötigter Speicherplatz reduziert werden. Die Anzahl an Zertifikaten, die eine Nutzereinrichtung besitzen muss, kann reduziert werden. Ferner kann eine Verarbeitung von nutzerbezogenen Daten bei der Diensteinrichtung vereinfacht werden, weil die nutzerbezogenen Daten ihr im benötigten Kontext zur Verfügung gestellt werden.

Über der gewöhnlichen Funktion eines digitalen Zertifikats, ein Authentisieren oder Autorisieren der Nutzereinrichtung zu ermöglichen, kann die Diensteinrichtung anhand der Zertifikatserweiterung ferner auf geschützte nutzerbezogene Datenzugreifen, ohne diese lokal in einer Datenbank abzuspeichern. Dadurch kann die Sicherheit erhöht werden.

Gemäß einer Ausführungsform umfasst die Zertifikatserweiterung zumindest einen der verschlüsselten nutzerbezogenen Datensätze. Mindestens ein verschlüsselter nutzerbezogener Datensatz kann in der Zertifikatserweiterung selbst, also in dem Zertifikat selbst, enthalten bzw. eingebettet sein. Die Zertifikatserweiterung ermöglicht insbesondere einen Namensaufruf ("call by name").
Gemäß einer weiteren Ausführungsform umfasst die Zertifikatserweiterung eine Adresse für zumindest einen der verschlüsselten nutzerbezogenen Datensätze.

Mindestens ein nutzerbezogener Datensatz ist insbesondere nicht direkt in der Zertifikatserweiterung oder in dem Zertifikat erhalten. Stattdessen kann die Zertifikatserweiterung die Adresse für zumindest einen nutzerbezogenen Datensatz enthalten, und diese der Diensteinrichtung zur Verfügung stellen. Die Adresse kann beispielsweise ein Pointer, eine Referenz, eine URL oder eine URI sein. Die Zertifikatserweiterung kann die nutzerbezogenen Datensätze somit verlinkt zur Verfügung stellen. Die Zertifikatserweiterung ermöglicht insbesondere einen Referenzaufruf ("call by reference").

Die verschlüsselten nutzerbezogenen Datensätze können in einem Speicher, zum Beispiel in der Nutzereinrichtung, abgelegt bzw. gespeichert sein. Der Diensteinrichtung kann durch die in der Zertifikatserweiterung vorgesehene Adresse ein Zugriff auf die nutzerbezogenen Datensätze ermöglicht werden.

In Ausführungsformen kann der Adresse ein Kontrollwert beigefügt werden. Der Kontrollwert kann insbesondere ein kryptographischer Hash der nutzerbezogenen Daten sein, auf die die Adresse verweist. So kann die Diensteinrichtung sicherstellen, dass sie keine gefälschten nutzerbezogenen Daten von der Adresse bezieht, da der Hash mit dem gesamten Zertifikatsinhalt digital signiert wird.

Durch die Übermittlung der Adresse in der Zertifikatserweiterung kann ein Zertifikat bereitgestellt werden, das wenig Speicherplatz benötigt. Ferner können nutzerbezogene Daten, die in dem Zertifikat zu viel Speicherplatz beanspruchen würden, der Diensteinrichtung trotzdem bereitgestellt werden.

Gemäß einer weiteren Ausführungsform umfasst die Zertifikatserweiterung zumindest einen Identifizierer zum Kennzeichnen von zumindest einem der verschlüsselten nutzerbezogenen Datensätze. Der Identifizierer, auch Identifier, dient insbesondere zur eindeutigen Identifizierung eines bestimmten verschlüsselten nutzerbezogenen Datensatzes. Die Daten können anhand der Identifizierers im Anwendungskontext eindeutig identifiziert werden. Insbesondere kann der Austausch der Daten in einem vollständig separierten Prozess, z.B. manuell, erfolgen.

Gemäß einer weiteren Ausführungsform ist das digitale Zertifikat ein Public-Key-Zertifikat und/oder ein Attributzertifikat.

Die Zertifikatserweiterung kann als Erweiterung für unterschiedliche digitale Zertifikate dienen. Hierzu gehören zum Beispiel Public-Key-Zertifikate oder Identitätszertifikate, die einen öffentlichen Schlüssel enthalten und ein Authentisieren der Nutzereinrichtung als Besitzer des öffentlichen Schlüssels ermöglichen, und Attributzertifikate, die keinen öffentlichen Schlüssel enthalten, sondern lediglich Attribute der Nutzereinrichtung. Die Zertifikatserweiterung ist somit vielfältig anwendbar.

Gemäß einer weiteren Ausführungsform ist das digitale Zertifikat ein digitales Zertifikat nach dem kryptographischen Standard X.509.

Gemäß einer weiteren Ausführungsform wird ein Verfahren zum Verwalten eines digitalen Zertifikats vorgeschlagen. Das Verfahren umfasst:
Verschlüsseln von mehreren nutzerbezogenen Datensätzen mit unterschiedlichen kryptographischen Schlüsseln;
Erstellen eines digitalen Zertifikats mit einer Zertifikatserweiterung; und
Bereitstellen der verschlüsselten nutzerbezogenen Datensätze mit der Zertifikatserweiterung.

Das zuvor und im Folgenden beschriebene Verfahren dient insbesondere zum Verwalten des zuvor und im Folgenden beschriebenen Zertifikats.

Unter "Verwalten" kann auch ein Handhaben oder Managen des Zertifikats verstanden werden. Insbesondere umfasst das Verwalten des Zertifikats auch das Erstellen und das Verwenden bzw. Nutzen des Zertifikats.

Zunächst können die nutzerbezogene Datensätze mit den kryptographischen Schlüsseln verschlüsselt werden. Die Verschlüsselung kann, wie im Folgenden noch näher beschrieben, durch die jeweiligen Diensteinrichtungen durchgeführt werden. Die zu verschlüsselnden nutzerbezogene Daten können von der Nutzereinrichtung selbst, von einer Speichereinrichtung oder von Diensteinrichtungen zur Verfügung gestellt werden.

Zum Erstellen des Zertifikats kann eine Zertifizierungsstelle bzw. Zertifizierungseinrichtung beauftragt werden. Zum Beispiel wird die Zertifizierungseinrichtung zum Erstellen des Zertifikats von der Nutzereinrichtung beauftragt. Die Zertifizierungseinrichtung kann die verschlüsselten nutzerbezogene Datensätze erhalten, um diese als Teil der Zertifikatserweiterung in das Zertifikat einzubinden. Die Zertifizierungseinrichtung kann dazu geeignet sein, das Zertifikat mit der Zertifikatserweiterung zu erstellen.

Die verschlüsselten nutzerbezogenen Datensätze können direkt in die Zertifikatserweiterung eingebettet werden, oder über die zuvor beschriebene Adresse und/oder Identifier mit der Zertifikatserweiterung bereitgestellt werden.

Gemäß einer weiteren Ausführungsform umfasst das Verfahren ferner:
Übermitteln des digitalen Zertifikats an eine Diensteinrichtung;
Entschlüsseln von zumindest einem der mit dem Zertifikat übermittelten nutzerbezogenen Datensätze unter Verwendung eines in der Diensteinrichtung gespeicherten korrespondierenden kryptographischen Schlüssels;
Bereitstellen eines Dienstes durch die Diensteinrichtung unter Verwendung des entschlüsselten nutzerbezogenen Datensatzes.

Das erzeugte digitale Zertifikat mit der Zertifikatserweiterung kann in eine Speichereinrichtung, zum Beispiel in die Nutzereinrichtung gespeichert werden, und zum Verwenden der durch die Diensteinrichtung angebotenen Dienste eingesetzt werden. Das digitale Zertifikat kann zum Verwenden der Dienste der Diensteinrichtung an die Diensteinrichtung übertragen werden.

Wie bereits beschrieben kann in der Diensteinrichtung zumindest ein kryptographischer Schlüssel gespeichert sein, mit dem zumindest ein nutzerbezogener Datensatz entschlüsselt werden kann. Damit der verschlüsselte nutzerbezogene Datensatz entschlüsselt werden kann, muss die Diensteinrichtung einen kryptographischen Schlüssel aufweisen, der mit dem Schlüssel korrespondiert, der zum Verschlüsseln des Datensatzes verwendet wurde.

Datensätze, für die die Diensteinrichtung keinen korrespondierenden Schlüssel aufweist, können insbesondere nicht entschlüsselt werden und bleiben für die Diensteinrichtung geheim.

Nur falls die Diensteinrichtung mit ihrem korrespondierenden kryptographischen Schlüssel einen nutzerbezogenen Datensatz entschlüsseln kann, stellt sie der Nutzereinrichtung mindestens einen Dienst bereit. Die Dienste können der Nutzereinrichtung in Abhängigkeit des entschlüsselten nutzerbezogenen Datensatzes bereitgestellt werden.

Gemäß einer weiteren Ausführungsform umfasst das Verfahren ferner:
Überprüfen des Vorhandenseins eines korrespondierenden kryptographischen Schlüssels zur Entschlüsselung von einem der nutzerbezogenen Datensätze in der Diensteinrichtung ;
Falls kein korrespondierender kryptographischer Schlüssel zur Entschlüsselung von einem der nutzerbezogenen Datensätze vorhanden ist, Unterbinden des Bereitstellens des Dienstes durch die Diensteinrichtung oder Verringerung des Umfangs der durch die Diensteinrichtung bereitgestellten Dienste.

Insbesondere kann überprüft werden, ob einer der nutzerbezogenen Datensätze unter Verwendung des in der Diensteinrichtung gespeicherten korrespondierenden kryptographischen Schlüssels entschlüsselbar ist. In Ausführungsformen wird in Abhängigkeit der Identifizierer im Zertifikat das Vorhandensein eines kryptographischen Schlüssels zur Entschlüsselung eines nutzerbezogenen Datensatzes geprüft. Die Datensätze, für die die Diensteinrichtung keinen korrespondierenden Schlüssel aufweist, können insbesondere nicht entschlüsselt werden und bleiben für die Diensteinrichtung geheim.

Gemäß einer weiteren Ausführungsform umfasst das Verfahren ferner:
Verschlüsseln der mehreren nutzerbezogene Datensätze in unterschiedlichen Diensteinrichtungen in Anwendung von unterschiedlichen kryptographischen Schlüsseln, die in den unterschiedlichen Diensteinrichtungen gespeichert sind.

Insbesondere erhalten die jeweiligen Diensteinrichtungen diejenigen nutzerbezogene Daten von der Nutzereinrichtung, die sie zum Bereitstellen ihrer Dienste an die Nutzereinrichtung benötigen. Jede Diensteinrichtung kann einen kryptographischen Schlüssel zur Verschlüsselung und einen korrespondierenden kryptographischen Schlüssel zur Entschlüsselung von nutzerbezogenen Daten bzw. nutzerbezogenen Datensätzen aufweisen.

Die in der Diensteinrichtung gespeicherten kryptographischen Schlüssel können als symmetrische oder asymmetrische Schlüssel in einer Schlüsselgenerierung global, also unabhängig von der Nutzereinrichtung, erzeugt werden. Hierzu kann der Diensteinrichtung ein globaler symmetrischer Systemschlüssel zugewiesen werden, von welchem einzelne, nutzereinrichtungsspezifische Schlüssel abgeleitet werden können. Es können insbesondere ein Schlüssel zum Integritätsschutz sowie ein Schlüssel zur Verschlüsselung erzeugt werden.

Unterschiedliche Schlüssel für unterschiedliche Anwendungen zu verwenden hat insbesondere den Vorteil, dass z.B. die Diensteinrichtung den Schlüssel für den Integritätsschutz an den Nutzer oder einen Dritten weitergeben kann, damit dieser überprüfen kann, ob er die Daten unverändert erhalten hat, ohne dass er sie selbst entschlüsseln kann.

Die Diensteinrichtung kann die kryptographischen Schlüssel, insbesondere den Schlüssel zur Verschlüsselung und den Schlüssel zum Integritätsschutz, auch nutzereinrichtungsspezifisch erzeugen.

Gemäß einer weiteren Ausführungsform umfasst das Verfahren ferner:
Überprüfen, ob der entschlüsselte nutzerbezogene Datensatz für die Dienste der Diensteinrichtung verwendbar ist; und
Falls der entschlüsselte nutzerbezogene Datensatz für die Dienste der Diensteinrichtung verwendbar ist, Bereitstellen bestimmter Dienste durch die Diensteinrichtung.

Die Diensteinrichtung kann zudem überprüfen, ob die entschlüsselten nutzerbezogenen Daten bestimmten, von der Diensteinrichtung gesetzten Voraussetzungen entsprechen. Zum Beispiel kann überprüft werden, ob ein Alter des Nutzers der Nutzereinrichtung den Voraussetzungen für die Nutzung der Diensteinrichtung genügt. Ferner kann überprüft werden, ob der entschlüsselte nutzerbezogene Datensatz alle nutzerbezogene Daten enthält, die für das Bereitstellen des Dienstes durch die Diensteinrichtung notwendig sind. Nur falls alle Voraussetzungen erfüllt sind, stellt die Diensteinrichtung der Nutzereinrichtung bestimmte Dienste bereit. Die Dienste werden insbesondere unter Verwendung des entschlüsselten nutzerbezogenen Datensatzes bereitgestellt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen des digitalen Zertifikats und des Verfahrens. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele. Im Weiteren werden bevorzugte Ausführungsformen unter Bezugnahme auf die beigelegten Figuren näher erläutert.
- Fig. 1: zeigt ein ausführungsgemäßes System zum Verwalten eines digitalen Zertifikats;
- Fig. 2: zeigt ein ausführungsgemäßes digitales Zertifikat;
- Fig. 3: zeigt ein Verfahren zum Verwalten eines digitalen Zertifikats gemäß einer ersten Ausführungsform; und
- Fig. 4: zeigt ein Verfahren zum Verwalten eines digitalen Zertifikats gemäß einer zweiten Ausführungsform.

In den Figuren sind gleiche oder funktionsgleiche Elemente mit denselben Bezugszeichen versehen worden, sofern nichts anderes angegeben ist.

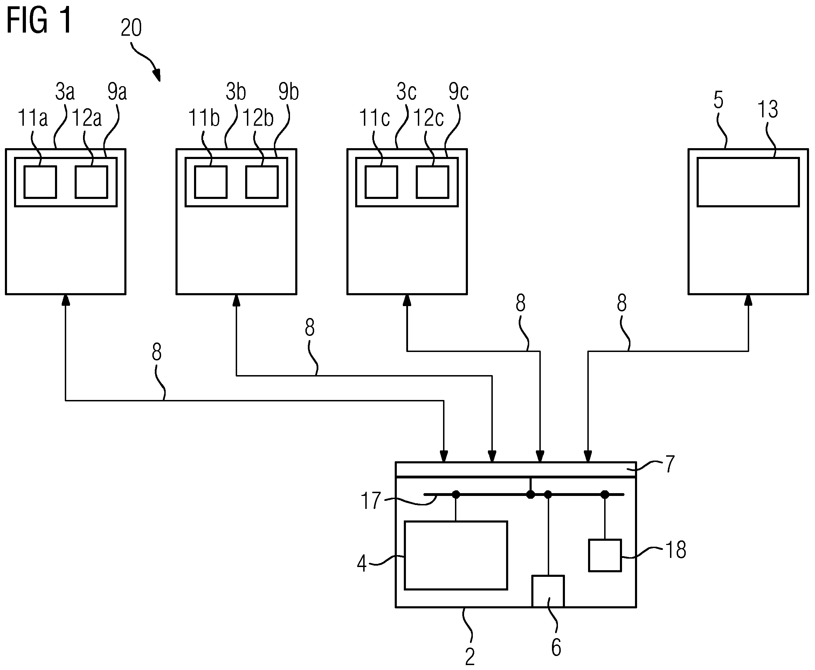

Die Fig. 1 zeigt ein ausführungsgemäßes System 20 zum Verwalten eines digitalen Zertifikats. Das System 20 umfasst eine Nutzereinrichtung 2, drei Diensteinrichtungen 3a - 3c und eine Zertifizierungseinrichtung 5.

Die Nutzereinrichtung 2 ist ein (privater) Computer, der über eine Nutzerschnittstelle 6 Befehle von einem nicht dargestellten Nutzer erhält, und Informationen an den Nutzer ausgibt. Der Nutzer ist eine Person. In weiteren Ausführungsformen könnte der Nutzer auch ein Gerät sein. Die Nutzerschnittstelle 6 enthält eine Computertastatur sowie einen Bildschirm. Der Computer 2 enthält ferner eine Festplatte 4 als Speichereinrichtung 4 zum Speichern von Daten wie nutzerbezogene Daten, digitale Zertifikate usw., sowie einen Prozessor 18. Die Schnittstellen 6, 7, die Festplatte 4 und der Prozessor 18 sind über einen internen Bus 17 miteinander verbunden. Der Nutzer verwendet den Computer 2, um auf Dienste, die von den Diensteinrichtungen 3a - 3c angeboten werden, zuzugreifen.

Die Diensteinrichtungen 3a - 3c sind Dienstanbieter aus dem Internet. Der Dienstanbieter 3a ist eine Spieleplattform zum Spielen von Onlinecomputerspielen, die nur für über 18-jährige zugelassen sind. Der Dienstanbieter 3b ist ein Onlinebestelldienst zum Bestellen von Computerzubehör, und der Dienstanbieter 3c ist ein Aktualisierungsdienst zum Aktualisieren von Computerbetriebssystemen.

Jede der Diensteinrichtungen 3a - 3c benötigt eine bestimmte Information bzw. bestimmte nutzerbezogene Daten von dem Computer 2, um ihre Dienste auszuführen. Die Spieleplattform 3a benötigt das Geburtsdatum sowie den Namen des Nutzers. Der Onlinebestelldienst 3b benötigt den Namen, eine Anschrift, und eine Kontonummer des Nutzers. Schließlich sind zur Nutzung des Aktualisierungsdienstes 3c Informationen über den Computer 2, so wie die Seriennummer und der Hersteller erforderlich.

Die nutzerbezogenen Daten für die eine Nutzereinrichtung sollen den anderen aus Sicherheitsgründen nicht zugänglich sein. So soll zum Beispiel nur der Onlinebestelldienst 3b die Kontonummer des Nutzers erfahren, um diese vor Missbräuchen zu schützen.

Die jeweiligen Diensteinrichtungen 3a - 3c umfassen Schlüsselspeichereinheiten 9a - 9c, um jeweils einen Schlüssel zum Verschlüsseln 11a - 11c und einen Schlüssel zum Entschlüsseln 12a - 12c als korrespondierenden kryptographischen Schlüssel zu speichern. Die Schlüsselspeichereinheiten 9a - 9c sind sichere Schlüsselspeicher. Die Schlüssel 11a - 11c und 12a - 12c sind jeweils kryptographische Schlüssel. Die jeweiligen Schlüssel zum Verschlüsseln 11a - 11c bilden mit den jeweiligen Schlüsseln zum Entschlüsseln 12a - 12c kryptographische Schlüsselpaare. Die Schlüssel zum Entschlüsseln 12a - 12c können jeweils eingesetzt werden, um Daten zu entschlüsseln, die zuvor mit den Schlüsseln zum Verschlüsseln 11a - 11c verschlüsselt wurden. In alternativen Ausführungsformen können die Schlüssel auch symmetrische Schlüssel sein, sodass die Schlüssel zum Verschlüsseln 11a - 11c und die Schlüssel zum Entschlüsseln 12a - 12c gleich sind.

Die Diensteinrichtungen 3a - 3c erhalten die nutzerbezogene Daten anhand eines einzigen digitalen Zertifikats, welches im Folgenden näher erläutert wird. Das digitale Zertifikat wird über das Internet 8, welches die Diensteinrichtungen 3a - 3c mit einer Netzwerkschnittstelle 7 des Computers 2 verbindet, von dem Computer 2 an die jeweiligen Diensteinrichtungen 3a - 3c übertragen.

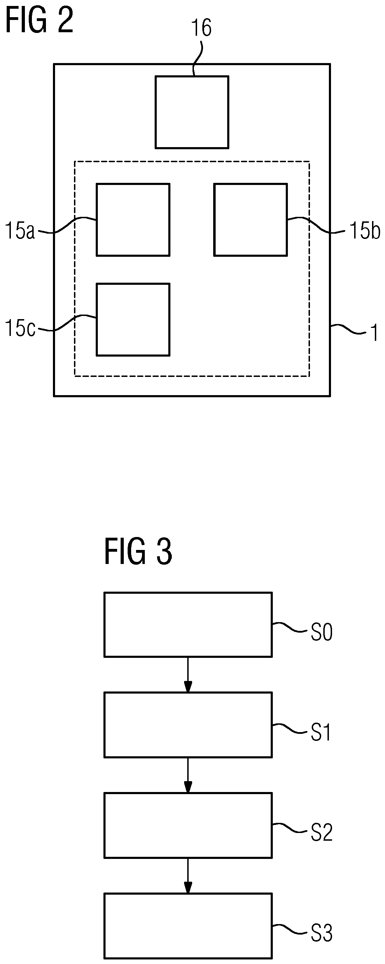

Das digitale Zertifikat wird mit Bezug auf die Fig. 2 näher erläutert. Die Fig. 2 stellt ein ausführungsgemäßes digitales Zertifikat 1 dar. Das Zertifikat 1 ist ein Public -Key-Zertifikat nach dem kryptographischen Standard X.509, welches einen öffentlichen kryptographischen Schlüssel 16 enthält.

Das digitale Zertifikat 1 umfasst zudem eine Zertifikatserweiterung 14 mit drei verschlüsselten nutzerbezogenen Datensätzen 15a - 15c. Jeder nutzerbezogener Datensatz enthält mehrere nutzerbezogenen Daten über die Nutzereinrichtung oder über den Nutzer. Die nutzerbezogenen Daten umfassen den Namen, die Anschrift, die Kontonummer, das Geburtsdatum des Nutzers, sowie die Seriennummer und der Hersteller des Computers 2, also die Information, die durch die Diensteinrichtungen 3a - 3c zum Durchführen der Dienste benötigt werden.

Das Erstellen des Zertifikats 1 wird mit Bezug auf die Fig. 1 bis 3 beschrieben. Die Fig. 3 stellt ein Verfahren zum Verwalten eines digitalen Zertifikats gemäß einer ersten Ausführungsform dar.

In einem Vorbereitungsschritt SO werden nutzerbezogene Datensätze bereitgestellt. Auf Anfrage der jeweiligen Diensteinrichtungen 3a - 3c stellt der Nutzer bzw. die Nutzereinrichtung den jeweiligen Diensteinrichtungen 3a - 3c die benötigten nutzerbezogenen Daten zur Verfügung.

Die Spieleplattform 3a fordert den Nutzer über den Bildschirm 6 auf, ihm seinen Namen und sein Geburtsdatum zukommen zu lassen. Der Nutzer gibt daraufhin über die Tastatur 6 seinen Namen und sein Geburtsdatum ein. Diese Information bildet einen nutzerbezogenen Datensatz für die Spieleplattform 3a, der als die nutzerbezogenen Daten den Namen und das Geburtsdatum des Nutzers enthält. Der nutzerbezogene Datensatz wird über das Internet 8 an die Spieleplattform 3a übertragen. In alternativen Ausführungsformen könnte diese Übertragung auch komplett offline passieren, z.B. unter Nutzung von Diensten wie einem Postdienst, um sicherzustellen, dass der Nutzer auch sein richtiges Geburtsdatum angibt. Das heißt, die zu verschlüsselnden Datensätze können auch auf anderen Wegen zu den Diensteinrichtungen 3a - 3c kommen.

Ähnlich hierzu stellt der Nutzer über den Computer 2 auch für den Onlinebestelldienst 3b ein Datensatz zur Verfügung, welcher die für den Onlinebestelldienst 3b benötigte Information enthält, also den Namen, die Anschrift, und die Kontonummer des Nutzers. Der Datensatz für den Onlinebestelldienst 3b wird diesem zugesandt.

Die von dem Aktualisierungsdienst 3c benötigte Information, also die Seriennummer und der Hersteller des Computers 2, ist computerspezifisch und über das Betriebssystem abfragbar und kann auf der Festplatte 4 gespeichert sein. Der Computer 2 liest die notwendigen Informationen von der Festplatte 4 und sendet die Seriennummer und die Herstellerinformation als einen weiteren Datensatz an den Aktualisierungsdienst 3c.

Das Bereitstellen der einzelnen Datensätze an die jeweiligen Diensteinrichtungen 3a - 3c erfolgt unabhängig voneinander. Die bereitgestellten nutzerbezogenen Informationen werden mit einem nutzerspezifischen Identifizierer in der jeweiligen Diensteinrichtung gespeichert. Der nutzerbezogene Identifizierer ist ein Datum, das auch später im Zertifikat 1 enthalten ist und kann beispielsweise der Nutzename sein.

In einem Schritt S1 werden die nutzerbezogene Datensätze verschlüsselt. Die jeweiligen Diensteinrichtungen 3a - 3c verschlüsseln die jeweiligen empfangenen Datensätze anhand der Schlüssel zum Verschlüsseln 11a - 11c.

Die Schlüssel zum Verschlüsseln 11a - 11c werden durch die jeweiligen Diensteinrichtungen 3a - 3c zusammen mit den Schlüsseln zum Entschlüsseln 12a - 12c als kryptographische Schlüsselpaare, die nutzerspezifisch bzw. nutzereinrichtungsspezifisch sind, erzeugt und in den Schlüsselspeichereinheiten 9a - 9c gespeichert.

Der Schlüssel zum Verschlüsseln 11a wird durch die Spieleplattform 3a verwendet, um den empfangenen nutzerbezogenen Datensatz zu verschlüsseln, wodurch der verschlüsselte nutzerbezogene Datensatz 15a erhalten wird. Die Diensteinrichtungen 3b und 3c verschlüsseln ihre Datensätze anhand ihrer Schlüssel zum Verschlüsseln 11b und 11c und Erstellen somit die verschlüsselten nutzerbezogenen Datensätze 15b und 15c.

Die verschlüsselten nutzerbezogenen Daten 15a - 15c werden von den jeweiligen Diensteinrichtungen über ein Netzwerk, z.B. das Internet 8, an den Computer 2 geschickt. Dieser kann die verschlüsselten nutzerbezogenen Daten 15a - 15c auf der Festplatte 4 des Computers 2 zwischenspeichern.

In einem Schritt S2 wird das digitale Zertifikat 1 mit der Zertifikatserweiterung 14 erstellt. Das Zertifikat 1 wird durch die Zertifizierungseinrichtung 5 erstellt. Hierzu beantragt der Computer 2 bei der Zertifizierungseinrichtung 5 zunächst ein Zertifikat über eine Zertifikatsregistrierungsanforderung. Der Computer 2 liefert der Zertifizierungseinrichtung 5 zudem die verschlüsselten nutzerbezogenen Daten 15a - 15c, die in die Zertifikatserweiterung 14 eingebettet werden sollen.

Die Zertifizierungseinrichtung 5 umfasst eine Vorlagenspeichereinheit 13, welche Zertifikatsvorlagen enthält. Die Zertifikatsvorlagen definieren die Struktur von zu erstellenden Zertifikaten. In der Vorlagenspeichereinheit 13 ist sowohl ein Public-Key-Zertifikat nach dem Standard X.509 als auch ein Attributzertifikat nach dem Standard X.509 definiert.

Das Public-Key-Zertifikat ist in Ausführungsformen in der abstrakten Syntaxnotation Eins (ASN.1) zum Implementieren in einer verbreiteten Programmiersprache wie C, C++ oder Python wie folgt definiert:

```
 Certificate ::= SEQUENCE {
     tbsCertificate TBSCertificate,
     signatureAlgorithm AlgorithmIdentifier,
     signatureValue BIT STRING }
     TBSCertificate ::= SEQUENCE {
     version [0] Version must be v3,
     serialNumber CertificateSerialNumber,
     signature AlgorithmIdentifier,
     issuer Name,
     validity Validity,
     subject Name,
     subjectPublicKeyInfo SubjectPublicKeyInfo,
     issuerUniqueID [1] IMPLICIT UniqueIdentifier
                              OPTIONAL -- If present, version
                              MUST be v2 or v3
     subjectUniqueID [2] IMPLICIT UniqueIdentifier
                              OPTIONAL, -- If present, ver-
                              sion MUST be v2 or v3
     extensions [3] EXPLICIT Extensions
                              OPTIONAL -- If present, version
                              MUST be v3
     }
     Validity ::= SEQUENCE {
     notBefore Time,
     notAfter Time }
     Time ::= CHOICE {
     utcTime UTCTime,
     generalTime GeneralizedTime }
```

Auf der rechten Seite der ASN.1 Struktur befinden sich Kommentare zu den links definierten Funktionen. Besonders wichtig ist, dass die Definition des Public-Key-Zertifikats ein Einbinden von Erweiterungen bzw. Zertifikatserweiterungen 14 zulässt. Dieses wird anhand der Funktion "extensions" ermöglicht.

In der Vorlagenspeichereinheit 13 wird zudem ein Attributzertifikat in ASN.1 nach dem Standard X.509 wie folgt definiert:

```
 AttributeCertificate::= SEQUENCE {
    Acinfo AttributeCertificateInfo,
    signatureAlgorithm AlgorithmIdentifier,
    signatureValue BIT STRING
    }
    AttributeCertificateInfo::= SEQUENCE {
    Version AttCertVersion -- version is
   v2,
    holder Holder,
    issuer AttCertIssuer,
    signature AlgorithmIdentifier,
    serialNumber CertificateSerialNumber,
    attrCertValidityPeriod AttCertValidityPeriod,
    attributes SEQUENCE OF Attribute,
    issuerUniqueID UniqueIdentifier OPTIONAL,
    extensions Extensions OPTIONAL
 }
 Attribute::= SEQUENCE {
    Type AttributeType,
    values SET OF AttributeValue-- at
                                least one value required.
                                }
                                AttributeType::= OBJECT IDENTIFIER
                                AttributeValue::= ANY DEFINED BY AttributeType
```

Auch hier besteht der rechte Teil der ASN.1 Struktur aus Kommentaren. Besonders wichtig ist, dass die Definition des Attributzertifikats ein Einbinden von Erweiterungen bzw. Zertifikatserweiterungen 14 zulässt. Dieses wird anhand der Funktion "extensions" ermöglicht.

Die Zertifikatserweiterung 14 ist für das Public-Key-Zertifikat dieselbe wie für das Attributzertifikat. Eine Zertifikatserweiterung 14, die eine Einbettung der nutzerbezogenen Datensätze in das Zertifikat 1 ermöglicht, wird in der Vorlagenspeichereinheit 13 wie folgt definiert:

```
 id-on-PrivateData OBJECT IDENTIFIER ::= { id-on 3 }
 PrivateData ::= SEQUENCE {
    serviceProvider Name OPTIONAL,
                          -- identifies the associated pro-
          vider
    encKeyID INTEGER,
                          -- identifies the utilized key for
                             encryption
    encKeySalt OCTET STRING OPTIONAL,
                          -- salt for encryption key
    intKeyID INTEGER OPTIONAL,
                          -- identifies the utilized key for
                             integrity
    intKeySalt OCTET STRING OPTIONAL,
                          -- salt for integrity key
    encData OCTET STRING,
                          -- encrypted data
    encDataMAC OCTET STRING OPTIONAL,
                          -- MAC of encrypted data
                          }
```

Mit der zuvor definierten Zertifikatserweiterung 14 werden die verschlüsselten nutzerbezogenen Datensätze über den Eintrag "encData" in der ASN.1 Struktur der PrivateData Erweiterung direkt in das Zertifikat 1 eingebunden.

Eine Zertifikatserweiterung, die es ermöglicht, dem Zertifikat 1 eine Adresse für die Verlinkung der nutzerbezogenen Datensätze in das Zertifikat 1 bereitzustellen bzw. einen Referenzaufruf ermöglicht, wird in der Vorlagenspeichereinheit 13 wie folgt definiert:

```
 id-on-PrivateDataLinked OBJECT IDENTIFIER ::= { id-on 4 }
 PrivateDataLinked ::= SEQUENCE {
    serviceProvider Name OPTIONAL,
                        -- identifies the associated provider
    intKeyID INTEGER OPTIONAL,
                        -- identifies the utilized key for
                        integrity
    intKeySalt OCTET STRING OPTIONAL,
                        -- salt for integrity key
    encDataLink OCTET STRING,
                        -- encrypted data
    encDataMAC OCTET STRING,
                        -- MAC of remote encrypted data
                        }
```

Mit der zuvor definierten Zertifikatserweiterung wird anhand der Funktion "encDataLink" in das Zertifikat 1 eine Adresse eingebunden, die einen Link zu den verschlüsselten nutzerbezogenen Datensätzen bereitstellt.

Die Zertifizierungseinrichtung 5 erstellt das in der Fig. 2 dargestellte Zertifikat 1 mit der Zertifikatserweiterung 14, die das direkte einbetten der nutzerbezogenen Datensätze in die ASN.1 Struktur der PrivateDataLinked Erweiterung in den Bereich "encData" ermöglicht.

In einem Schritt S3 werden die verschlüsselten nutzerbezogenen Datensätze 15a - 15c mit der Zertifikatserweiterung 14 bereitgestellt. Die verschlüsselten Datensätze 15a - 15c werden dem Zertifikat 1 als Teil der Zertifikatserweiterung 14 hinzugefügt, sodass die verschlüsselten Datensätze 15a - 15c mit dem Zertifikat 1 übermittelt werden können. Der Schritt S3 kann Teil des Schritts S2 sein.

Das erstellte Zertifikat 1 kann auf der Festplatte 4 der Nutzereinrichtung 4 gespeichert werden. Das Zertifikat 1 kommt zum Einsatz, wenn der Nutzer oder die Nutzereinrichtung 2 einen Dienst von einer der Diensteinrichtungen 3a - 3c nutzen möchte.

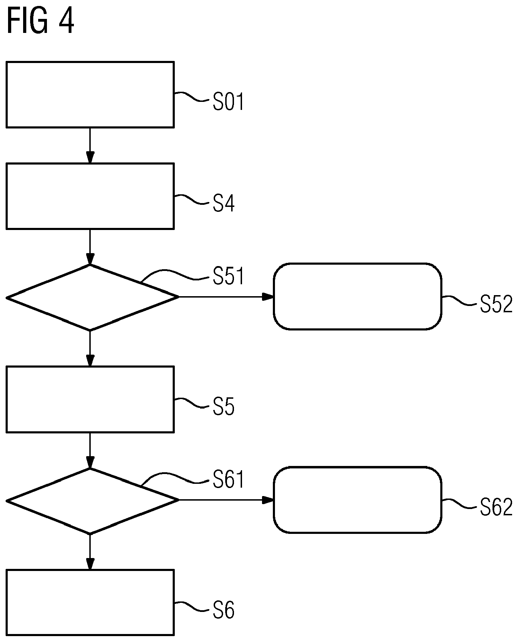

Die Nutzung des Zertifikats 1 wird anhand der Fig. 4 beschrieben. Die Fig. 4 zeigt ein Verfahren zum Verwalten eines digitalen Zertifikats gemäß einer zweiten Ausführungsform.

In einem Schritt S01 wird das erstellte digitale Zertifikat 1, welches auch in der Fig. 2 gezeigt ist, bereitgestellt. Das Zertifikat 1 ist auf der Festplatte 4 abgelegt.

In einem Schritt S4 wird das Zertifikat 1 an eine der Diensteinrichtungen 3a - 3c übermittelt. Das Zertifikat 1 wird hier zum Nutzen der Dienste der Spieleplattform 3c an diese übertragen. Die Prüfung der Berechtigung der Nutzung des Zertifikates durch den Nutzer wird durch eine Authentisierung erreicht, bei der der zugehörige private Schlüssel angewendet wird. Dies kann beispielsweise ein Challenge Response Verfahren sein, bei dem die Diensteinrichtung eine Information schickt, die vom Nutzer mit Hilfe des privaten Schlüssels digital signiert wird. sein. Die Diensteinrichtung kann die digitale Signatur mittels des Zertifikats 1 überprüfen.

In einem Schritt S51 wird überprüft, ob ein nutzerbezogener Datensatz 15a - 15c, der in dem Zertifikat 1 enthalten ist, mit dem Schlüssel zum Entschlüsseln 12a, der in der Diensteinrichtung 3a gespeichert ist, entschlüsselt werden kann. Hierzu ermittelt die Diensteinrichtung 3a aus dem Zertifikat 1 einen nutzerbezogenen Identifizierer mit dessen Hilfe ein Schlüssel zum Entschlüsseln 12a der nutzerbezogenen Datensätze 15a - 15c ermittelt wird. Weil der Schlüssel zum Entschlüsseln 12a mit dem Schlüssel zum Verschlüsseln 11a, mit dem der nutzerbezogene Datensatz 15a verschlüsselt wurde, ein kryptographisches Schlüsselpaar bildet, kann der verschlüsselte nutzerbezogene Datensatz 15a mit dem Schlüssel zum Entschlüsseln 12a entschlüsselt werden. Handelt es sich bei den Schlüssel um symmetrische Schlüssel, wird bei der jeweiligen Diensteinrichtung eine sichere Datenbank geführt, in der die Schlüssel zum Entschlüsseln nutzerbezogener Daten liegen und über einen nutzerbezogenen Identifizierer aus dem Zertifikat gefunden werden können.

Die nutzerbezogenen Datensätze 15b und 15c können nicht mit dem Schlüssel zum Entschlüsseln 12a entschlüsselt werden, sodass die darin enthaltene Information der Spieleplattform 3a unbekannt bleibt. Obwohl alle Datensätze 15a - 15c in einem selben Zertifikat 1 vorliegen, können die Daten geschützt übertragen werden.

Falls in dem Schritt S51 erkannt wird, dass ein Datensatz 15a - 15c mit dem Schlüssel zum Entschlüsseln 12a entschlüsselbar ist, wir dieser Datensatz in einem Schritt S5 entschlüsselt. Der nutzerbezogene Datensatz 15a wird anhand des Schlüssels zum Entschlüsseln 15a entschlüsselt.

Für den Fall, dass die Diensteinrichtung, die das Zertifikat 1 enthalten hat, keinen der verschlüsselten nutzerbezogenen Datensätze 15a - 15c entschlüsseln kann, wird ein Bereitstellen des Dienstes der Diensteinrichtung in einem Schritt S52 unterbunden bzw. ein Dienst niederer Qualität angeboten. Dieses ist der Fall, wenn die Diensteinrichtung keinen passenden Schlüssel zum Entschlüsseln hat. In dem Schritt S52 überträgt die Diensteinrichtung 3a eine Fehlermeldung an den Computer 2.

In einem Schritt S61 wird überprüft, ob der entschlüsselte nutzerbezogene Datensatz 15a für die Dienste der Diensteinrichtung 3a verwendbar ist. Es wird zunächst geprüft, ob der entschlüsselte nutzerbezogene Datensatz 15a die Information enthält, die für die Diensteinrichtung 3a zum Bereitstellen ihrer Dienste notwendig ist. Es wird also überprüft, ob der nutzerbezogene Datensatz den Namen des Nutzers sowie sein Geburtsdatum enthält. Anschließend wird anhand des Geburtsdatums überprüft, ob der Nutzer über 18 Jahre alt ist.

Falls alle Voraussetzungen erfüllt sind, wird entschieden, dass der entschlüsselte nutzerbezogene Datensatz 15a für die Dienste der Diensteinrichtung 3a verwendbar ist, und die Diensteinrichtung 3a stellt in einem Schritt S6 dem Computer 2 ihre Dienste bereit. Der Nutzer des Computers 2 kann dann über das Internet 8 online Computerspiele spielen.

Der Spieleplattform 3c werden dabei nur die nutzerbezogenen Daten zur Verfügung gestellt, die von der Spieleplattform 3c zum Bereitstellen ihrer Dienste benötigt werden. Die Spieleplattform 3c erhält dabei keinen Zugriff auf weitere nutzerbezogenen Daten, die im Zertifikat 1 enthalten sind, wie auf die nutzerbezogenen Daten für andere Diensteinrichtungen 3b, 3c.

Falls in dem Schritt S61 bestimmt wird, dass der entschlüsselte nutzerbezogene Datensatz 15a für die Dienste der Diensteinrichtung 3a nicht verwendbar ist, wird in einem Schritt S62 ein Bereitstellen des Dienstes der Diensteinrichtung 3a unterbunden. Die Diensteinrichtung überträgt dann eine Fehlermeldung an den Computer 2.

Obwohl die vorliegende Erfindung anhand von Ausführungsbeispielen beschrieben wurde, ist sie vielfältig modifizierbar. Es können beliebig viele verschlüsselte Datensätze für beliebig viele Diensteinrichtungen mit dem digitalen Zertifikat 1 übermittelt werden. Die Nutzereinrichtung 2 kann zum Beispiel auch eine Chipkarte oder ein Tablet sein. Die Diensteinrichtungen sind nicht auf die beschriebenen Diensteinrichtungen 3a - 3c beschränkt. Sie können auch andere Dienste anbieten, wie zum Beispiel eine Zahlung an einem Automaten, eine Zeiterfassung, usw. Die Zertifizierungseinrichtung 5 kann auch Teil der Nutzereinrichtung 2 sein. Die Generierung der Schlüsselpaare 11a - 11c und 12a - 12c kann auch eine globale Schlüsselgenerierung sein. Das heißt, dass die jeweiligen Schlüssel von einem allgemeinen, in den Diensteinrichtungen 3a - 3c gespeicherten Schlüssel abgeleitet werden können. Die Zertifikatserweiterung 14 muss nicht die nutzerbezogenen Datensätze 15a - 15c direkt umfassen, sondern kann z.B. auch eine Adresse umfassen, mit der die nutzerbezogenen Datensätze 15a - 15c verlinkt werden. Ferner ist der Programmcode für die Zertifikatserweiterung beliebig veränderbar.

## Patentansprüche

1. Digitales Zertifikat (1) für eine Nutzereinrichtung (2), wobei das Zertifikat (1) eine Zertifikatserweiterung (14) zur Bereitstellung von mit unterschiedlichen kryptographischen Schlüsseln (11a - 11c) verschlüsselten nutzerbezogenen Datensätzen (15a - 15c) umfasst, wobei jeder der nutzerbezogene Datensätze (15a - 15c) nur von einer Diensteinrichtung (3a - 3c) zum Bereitstellen von Diensten in Abhängigkeit von den nutzerbezogenen Daten abrufbar ist, die einen korrespondierenden kryptographischen Schlüssel (12a - 12c) zum Entschlüsseln des nutzerbezogenen Datensatzes (15a - 15c) umfasst.

2. Digitales Zertifikat nach Anspruch 1,
wobei die Zertifikatserweiterung (14) zumindest einen der verschlüsselten nutzerbezogenen Datensätze (15a - 15c) umfasst;
wobei die Zertifikatserweiterung (14) zumindest einen Identifizierer zum Kennzeichnen von zumindest einem der verschlüsselten nutzerbezogenen Datensätze (15a - 15c) umfasst; und/oder
wobei die Zertifikatserweiterung (14) eine Adresse für zumindest einen der verschlüsselten nutzerbezogenen Datensätze (15a - 15c) umfasst.

3. Digitales Zertifikat nach Anspruch 1 oder 2, welches ein Public-Key-Zertifikat und/oder ein Attributzertifikat ist.

4. Digitales Zertifikat nach einem der Ansprüche 1 bis 3, welches ein digitales Zertifikat nach dem kryptographischen Standard X.509 ist.

5. Verfahren zum Verwalten eines digitalen Zertifikats (1), umfassend:
Verschlüsseln (S1) von mehreren nutzerbezogenen Datensätzen (15a - 15c) mit unterschiedlichen kryptographischen Schlüsseln (11a - 11c);
Erstellen (S2) eines digitalen Zertifikats (1) mit einer Zertifikatserweiterung (14); und
Bereitstellen (S3) der verschlüsselten nutzerbezogene Datensätze (15a - 15c) mit der Zertifikatserweiterung (14).

6. Verfahren nach Anspruch 5, welches ferner umfasst:
Übermitteln (S4) des digitalen Zertifikats (1) an eine Diensteinrichtung (3a - 3c);
Entschlüsseln (S5) von zumindest einem der mit dem Zertifikat (1) übermittelten nutzerbezogenen Datensätzen (15a - 15c) unter Verwendung eines in der Diensteinrichtung (3a - 3c) gespeicherten korrespondierenden kryptographischen Schlüssels (12a - 12c);
Bereitstellen (S6) eines Dienstes durch die Diensteinrichtung (3a - 3c) unter Verwendung des entschlüsselten nutzerbezogenen Datensatzes (15a - 15c).

7. Verfahren nach Anspruch 6, welches ferner umfasst:
Überprüfen (S51) des Vorhandenseins eines korrespondierenden kryptographischen Schlüssels (12a - 12c) zur Entschlüsselung von einem der nutzerbezogene Datensätze (15a - 15c) in der Diensteinrichtung (3a - 3c); und
Falls kein korrespondierender kryptographischer Schlüssel (12a - 12c) zur Entschlüsselung von einem der nutzerbezogene Datensätze (15a - 15c) vorhanden ist, Unterbinden (S52) des Bereitstellens des Dienstes durch die Diensteinrichtung (3a - 3c) oder Verringerung des Umfangs der durch die Diensteinrichtung (3a - 3c) bereitgestellten Dienste.

8. Verfahren nach einem der Ansprüche 5 bis 7, welches ferner umfasst:
Verschlüsseln der mehreren nutzerbezogenen Datensätze (15a - 15c) in unterschiedlichen Diensteinrichtungen (3a - 3c) in Anwendung von unterschiedlichen kryptographischen Schlüsseln (11a - 11c), die in den unterschiedlichen Diensteinrichtungen (3a - 3c) gespeichert sind.

9. Verfahren nach einem der Ansprüche 5 bis 8, welches ferner umfasst:
Überprüfen (S61), ob der entschlüsselte nutzerbezogene Datensatz für die Dienste der Diensteinrichtung (3a - 3c) verwendbar ist; und
Falls der entschlüsselte nutzerbezogene Datensatz für die Dienste der Diensteinrichtung (3a - 3c) verwendbar ist, Bereitstellen (S62) des Dienstes durch die Diensteinrichtung (3a - 3c).

10. Verfahren nach einem der Ansprüche 5 bis 9 zum Verwalten des digitalen Zertifikats (1) nach einem der Ansprüche 1 bis 4.
